# EUROPEAN PATENT APPLICATION

(11) **EP 4 296 972 A1**
(43) Date of publication of application: **27.12.2023**
(21) Application number: 23177633.7
(22) Date of filing: 06.06.2023
(51) Int. Cl.: G06V 20/13, G06V 20/17, G06V 20/10, G06V 10/26, G06V 10/24, G06F 18/25

(54) **SYSTEM AND METHOD FOR REMOTE LABELLING OF HYPERSPECTRAL DATA**

(30) Priority: 23.06.2022 US 202217847960
(71) Applicant: Sharper Shape Oy, 02200 Espoo (FI)
(72) Inventor: Uljanovs, Jaro, 02200 Espoo (FI); Piiroinen, Rami, 02200 Espoo (FI); Kim, Hyeong-Jin, 02200 Espoo (FI)
(74) Representative: Moosedog Oy

(57) **Abstract**

Disclosed is system (100) for remote labelling of hyperspectral data, the system comprising: visible-light camera(s) (102), hyperspectral camera(s) (104), Light Detection and Ranging (LiDAR) scanner (106) for capturing LiDAR data, geolocation device (108) for generating geolocation data, and processor(s) (110) configured to: control hyperspectral camera(s) to capture hyperspectral image(s) (202) of first location in real-world environment; control visible-light camera(s) to capture visible-light image(s) (204) of first location; georeference hyperspectral image(s) and visible-light image(s) using at least LiDAR data and geolocation data; align hyperspectral image(s) and visible-light image(s) with respect to each other in pixel-wise manner; and label pixels of hyperspectral image(s) to generate labelled hyperspectral image(s), by using corresponding pixels of visible-light image(s) as ground truth material.

## Description

### TECHNICAL FIELD

The present disclosure relates to systems for remote labelling of hyperspectral data. The present disclosure also relates to methods for remote labelling of hyperspectral data. The present disclosure further relates to computer program products for remote labelling of hyperspectral data.

### BACKGROUND

Over the past decade, hyperspectral imaging (HSI) technology has gained popularity for several applications (for example, such as surveying, forestry, archeology, seismology, and the like). Nowadays, HSI technology is widely being used for manned or unmanned aerial surveying. In such a case, aerial vehicles (for example, helicopters, drones, and the like) are equipped with HSI cameras that are to be used for aerial surveillance. The HSI cameras capture hyperspectral data (such as in form of hyperspectral images comprising spatial information and spectral information) of a real-world environment. Such hyperspectral data is then labelled for various purposes such as material identification, material classification, and the like.

However, existing equipment and techniques for labelling hyperspectral data have several problems associated therewith. Firstly, the existing equipment and techniques are not well-suited for correctly and reliably labelling the hyperspectral data. This is because the existing techniques utilize field sampling for labelling the hyperspectral data, which generally requires human supervision (namely, on-the-ground human efforts). Therefore, the labelled hyperspectral data is error-prone and unreliable.

This also increases costs, time, and inconvenience for entities involved in a labelling process. Moreover, such techniques are incapable in providing a remote controllability for labelling the hyperspectral data. Secondly, the existing equipment and techniques are inefficient (i.e., are not scalable) in terms of handling a large volume of hyperspectral data (for example, of the order of several terabytes or petabytes) generated in a single aerial surveillance performed for important real-world applications (for example, such as vegetation management). This is because storing and processing such a large volume of hyperspectral data is extremely challenging and expensive. Thirdly, some existing techniques employ machine learning (ML)-based algorithms and deep learning models for labelling the hyperspectral data. However, such algorithms and models require extraction of features from said data, prior to utilizing said data for training the aforesaid models. This undesirably increases computational complexity and an overall cost.

Therefore, in light of the foregoing discussion, there exists a need to overcome the aforementioned drawbacks in existing equipment and techniques for labelling hyperspectral data.

### SUMMARY

The present disclosure seeks to provide a system for remote labelling of hyperspectral data. The present disclosure also seeks to provide a method for remote labelling of hyperspectral data. The present disclosure further seeks to provide a computer program product for remote labelling of hyperspectral data. An aim of the present disclosure is to provide a solution that overcomes at least partially the problems encountered in prior art.

In a first aspect, an embodiment of the present disclosure provides a system for remote labelling of hyperspectral data, the system comprising:
at least one visible-light camera arranged on an aerial vehicle that is employed for surveying a real-world environment;
at least one hyperspectral camera arranged on the aerial vehicle;
a Light Detection and Ranging (LiDAR) scanner arranged on the aerial vehicle, wherein the LiDAR scanner, in operation, captures LiDAR data of the real-world environment;
a geolocation device that, in operation, generates geolocation data of the aerial vehicle; and
at least one processor configured to:
   - control the at least one hyperspectral camera to capture at least one hyperspectral image of a first location in the real-world environment;
   - control the at least one visible-light camera to capture at least one visible-light image of the first location;
   - georeference the at least one hyperspectral image and the at least one visible-light image using at least the LiDAR data and the geolocation data;
   - align the at least one hyperspectral image and the at least one visible-light image with respect to each other in a pixel-wise manner; and
   - label pixels of the at least one hyperspectral image to generate at least one labelled hyperspectral image, by using corresponding pixels of the at least one visible-light image as ground truth material.

In a second aspect, an embodiment of the present disclosure provides a method for remote labelling of hyperspectral data, the method comprising:
- controlling at least one hyperspectral camera to capture at least one hyperspectral image of a first location in a real-world environment;
- controlling at least one visible-light camera to capture at least one visible-light image of the first location;
- georeferencing the at least one hyperspectral image and the at least one visible-light image using at least Light Detection and Ranging (LiDAR) data captured by a LiDAR scanner and geolocation data generated by a geolocation device;
- aligning the at least one hyperspectral image and the at least one visible-light image with respect to each other in a pixel-wise manner; and
- labelling pixels of the at least one hyperspectral image for generating at least one labelled hyperspectral image, by using corresponding pixels of the at least one visible-light image as ground truth material.

In a third aspect, an embodiment of the present disclosure provides a computer program product for remote labelling of hyperspectral data, the computer program product comprising a non-transitory machine-readable data storage medium having stored thereon program instructions that, when accessed by a processing device, cause the processing device to execute steps of a method of the aforementioned first aspect.

Embodiments of the present disclosure substantially eliminate or at least partially address the aforementioned problems in the prior art, and enable efficient, reliable, and accurate remote labelling of hyperspectral data, in real time or near-real time.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIGs. 1A and 1B illustrate block diagrams of architectures of a system for remote labelling of hyperspectral data, in accordance with an embodiment of the present disclosure;
FIGs. 2A, 2B, and 2C collectively illustrate a process flow for aligning a hyperspectral image and a visible-light image with respect to each other, in accordance with an embodiment of the present disclosure; and
FIG. 3 illustrates steps of a method for remote labelling of hyperspectral data, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system for remote labelling of hyperspectral data, the system comprising:
at least one visible-light camera arranged on an aerial vehicle that is employed for surveying a real-world environment;
at least one hyperspectral camera arranged on the aerial vehicle;
a Light Detection and Ranging (LiDAR) scanner arranged on the aerial vehicle, wherein the LiDAR scanner, in operation, captures LiDAR data of the real-world environment;
a geolocation device that, in operation, generates geolocation data of the aerial vehicle; and
at least one processor configured to:
   - control the at least one hyperspectral camera to capture at least one hyperspectral image of a first location in the real-world environment;
   - control the at least one visible-light camera to capture at least one visible-light image of the first location;
   - georeference the at least one hyperspectral image and the at least one visible-light image using at least the LiDAR data and the geolocation data;
   - align the at least one hyperspectral image and the at least one visible-light image with respect to each other in a pixel-wise manner; and
   - label pixels of the at least one hyperspectral image to generate at least one labelled hyperspectral image, by using corresponding pixels of the at least one visible-light image as ground truth material.

In a second aspect, an embodiment of the present disclosure provides a method for remote labelling of hyperspectral data, the method comprising:
- controlling at least one hyperspectral camera to capture at least one hyperspectral image of a first location in a real-world environment;
- controlling at least one visible-light camera to capture at least one visible-light image of the first location;
- georeferencing the at least one hyperspectral image and the at least one visible-light image using at least Light Detection and Ranging (LiDAR) data captured by a LiDAR scanner and geolocation data generated by a geolocation device;
- aligning the at least one hyperspectral image and the at least one visible-light image with respect to each other in a pixel-wise manner; and
- labelling pixels of the at least one hyperspectral image for generating at least one labelled hyperspectral image, by using corresponding pixels of the at least one visible-light image as ground truth material.

In a third aspect, an embodiment of the present disclosure provides a computer program product for remote labelling of hyperspectral data, the computer program product comprising a non-transitory machine-readable data storage medium having stored thereon program instructions that, when accessed by a processing device, cause the processing device to execute steps of a method of the aforementioned first aspect.

The present disclosure provides the aforementioned system, the aforementioned method, the aforementioned computer program product for accurate and reliable remote labelling of hyperspectral data in real time or near-real time (i.e., without any latency/delay). Herein, the system and the method enable pixel-perfect labelling of a (low resolution) hyperspectral image to generate a labelled hyperspectral image, by using a (high resolution) visible-light image as ground truth material. This beneficially facilitates in labelling the hyperspectral data without requiring any field sampling, which generally requires human supervision (namely, on-the-ground human efforts). This also considerably decreases labelling costs, labelling time, and inconvenience for entities involved in a labelling process. Since the hyperspectral image and the visible-light image are georeferenced prior to labelling, the aforesaid images are accurately aligned with respect to each other in the pixel-wise manner. This increases ease and accuracy in labelling the hyperspectral data. The system and the method are scalable in terms of handling a large volume of hyperspectral data, as the hyperspectral image and the visible-light image are optionally divided into multiple manageable tiles when the aforesaid images are aligned. Thus, storing and processing such tiles is considerably simple and less expensive. Furthermore, the system and the method do not require any extraction of features from said data, prior to utilizing said data for training any machine learning (ML)-based models. The system and the method are simple, robust, fast, reliable and can be implemented with ease.

Throughout the present disclosure, the term *"labelling"* of hyperspectral data refers to assigning semantically meaningful and informative labels (for example, in a form of notes, comments, descriptions, and the like) to the hyperspectral data. Such a hyperspectral data is represented in the at least one hyperspectral image. It will be appreciated that the system enables in labelling of the hyperspectral data remotely i.e., without requiring any field sampling, which generally requires human supervision (namely, on-the-ground human efforts). This also decreases costs, time, and inconvenience for entities involved. Moreover, the system allows to operate regulatory-accepted (considerably high) aerial vehicle flights while capturing high resolution images.

Throughout the present disclosure, the term *"camera"* refers to an equipment that is operable to detect and process light signals received from the real-world environment, so as to capture images of the real-world environment. In this regard, the at least one hyperspectral camera is operable to detect and process light signals of different wavelengths (for example, such as ultraviolet-light signals, visible-light signals, infrared (IR)-light signals, and the like) received from the real-world environment, so as to capture a given hyperspectral image. Such a hyperspectral image represents spatial information (namely, image features) of the real-world environment and spectral information of the real-world environment (for example, such as in form of spectral bands of electromagnetic spectrum for each pixel).

It will be appreciated that a given hyperspectral image may be in a form of a hypercube comprising n-dimensional hyperspectral image data. It will also be appreciated that a sensor of the at least one hyperspectral camera may utilize a push broom scanner set-up for capturing the at least one hyperspectral image, one line of pixels at a time. Each pixel in the at least one hyperspectral image is optionally timestamped. This can be used to acquire a GPS location of the aerial vehicle at the time of capturing the at least one hyperspectral image.

Furthermore, the at least one visible-light camera is operable to detect and process (only) visible-light signals received from the real-world environment, so as to capture a given visible-light image. Such a visible-light image represents visual content of the real-world environment, which encompasses not only colour information represented in the visible-light image, but also other attributes associated with said image (for example, such as depth information, brightness information, transparency information, and the like). In an example, a given visible-light image may be a nadir image (such as a satellite image or an aerial image of the Earth) having a resolution of 100 Megapixels (MP). shots Examples of the at least one visible-light camera include, but are not limited to, a Red-Green-Blue (RGB) camera, a Red-Green-Blue-Alpha (RGB-A) camera, a Red-Green-Blue-Depth (RGB-D) camera, an event camera, and a monochrome camera, a stereo camera.

Optionally, the at least one hyperspectral image has a first resolution and the at least one visible-light image has a second resolution, the second resolution being greater than the first resolution. Herein, the term *"resolution"* refers to a geographical area of the real-world environment represented by a given (i.e., single) pixel of a given image. The term *"given image"* encompasses the at least one hyperspectral image and/or the at least one visible-light image. It will be appreciated that the term *"resolution"* could also mean a number of pixels per degree (also referred to as points per degree (PPD) or a pixel density) in the given image. Greater the resolution of the given image, smaller is the geographical area represented by the given pixel, and greater is the visual detail represented by the pixel, and vice versa.

It will also be appreciated that, for a given geographical area, a number of pixels corresponding to the given geographical area in the at least one visible-light image would be higher, as compared to a number of pixels corresponding to the given geographical area in the at least one hyperspectral image. Thus, in such a case, the at least one visible-light image represents more comprehensive and accurate visual details of the given geographical area, as compared to the at least one hyperspectral image. Beneficially, this subsequently facilitates in accurately labelling the pixels of the at least one hyperspectral image, by using corresponding pixels of the at least one visible-light image. Furthermore, a size of a pixel in the at least one visible-light image may be smaller as compared to a size of a pixel in the at least one hyperspectral image.

Optionally, the first resolution lies in a range of 0.04 metre x 0.04 metre per pixel to 0.5 metre x 0.5 metre per pixel, and the second resolution lies in a range of 0.01 metre x 0.01 metre per pixel to 0.125 metre x 0.125 metre per pixel. In an example, the first resolution may be from 0.04 metre x 0.04 metre, 0.07 metre x 0.07 metre, 0.1 metre x 0.1 metre, 0.15 metre x 0.15 metre, 0.2 metre x 0.2 metre, or 0.3 metre x 0.3 metre per pixel up to 0.25 metre x 0.25 metre, 0.35 metre x 0.35 metre or 0.5 metre x 0.5 metre per pixel, and the second resolution may be from 0.01 metre x 0.01 metre, 0.02 metre x 0.02 metre, 0.04 metre x 0.04 metre, or 0.06 metre x 0.06 metre per pixel up to 0.03 metre x 0.03 metre, 0.05 metre x 0.05 metre, 0.07 metre x 0.07 metre, 0.1 metre x 0.1 metre per pixel or 0.125 metre x 0.125 metre.

In an example implementation, the first resolution may be 0.2 metre x 0.2 metre (i.e., 20 centimetre x 20 centimetre) per pixel, and the second resolution may be 0.05 metre x 0.05 metre (i.e., 5 centimetre x 5 centimetre) per pixel. This means that each pixel of the at least one hyperspectral image represents a geographical area of 40 square centimetres, whereas each pixel of the at least one visible-light image represents a geographical area of 25 square centimetres. Moreover, in an example, for an entirety of geographical area of 400 square metres, a number of pixels in the at least one hyperspectral image would be 10000, whereas a number of pixels in the at least one visible-light image would be 160000.

Optionally, the at least one hyperspectral image and the at least one visible-light image are captured simultaneously. In this regard, when the aforesaid images are captured simultaneously (i.e., at a same time), the given location in the real-world environment is imaged in a consistent manner with respect to real-world conditions (for example, such as same climate and weather conditions). In such a case, the at least one hyperspectral image and the at least one visible-light image have a nearly same temporal resolution. Beneficially, in such a case, the aforesaid images are not considerably different from each other, which otherwise would have been different when the aforesaid images are captured at different times (for example, in different weather conditions). This subsequently facilitates in accurate and reliable georeferencing and/or alignment of the aforesaid images.

Throughout the present disclosure, the term *"Light Detection and Ranging (LiDAR) scanner"* refers to an equipment that is capable of illuminating the real-world environment with a light signal (such as a laser signal), and then detecting and processing a reflection of the light signal that is received from the real-world environment, for comprehensively mapping the real-world environment (by generating the LiDAR data). Herein, the term *"LiDAR data"* refers information that is captured by the LiDAR scanner. Optionally, the LiDAR data comprises a plurality of data points. The plurality of data points may represent objects (for example, such as buildings, vegetation, and the like) on and above a ground surface in a three-dimensional (3D) space of the real-world environment. The plurality of data points could be collectively referred to as point clouds. Optionally, the LiDAR data of the real-world environment is in a form of at least one of: a Digital Terrain Model (DTM), a Digital Surface Model (DSM), a Digital Elevation Model (DEM). Such forms of the LiDAR data are well-known in the art, and used to create accurate ground-level projections, accounting for real-world objects, for example, such as man-made structures, vegetation, and the like.

Notably, the given camera and the LiDAR scanner are arranged on the aerial vehicle in a manner that the given camera and the LiDAR scanner are arranged to face the real-world environment for capturing the given image and the LiDAR data, respectively. Examples of the aerial vehicle include, but are not limited to, a drone, a helicopter, a fixed-wing aircraft, a satellite, and the like. The aerial vehicle could be an unmanned aerial vehicle (UAV) or a manned aerial vehicle (MAV). Generally, the UAVs are preferred over the MAVs because the UAVs are cost-effective and more suitable for covering long distances of surveillance as compared to the MAVs.

Throughout the present disclosure, the term *"geolocation device"* refers to an equipment that is capable of detecting a geolocation of the aerial vehicle in a 3D space of the real-world environment, and then generating the geolocation data of the aerial vehicle. Herein, the term *"geolocation data"* refers to information pertaining to the geolocation i.e., a real-world geographic location of the aerial vehicle in the 3D space of the real-world environment. Optionally, the geolocation device is implemented as at least one of: an Inertial Measurement Unit (IMU), a Timing and Inertial Measurement Unit (TIMU), a Global Navigation Satellite System (GNSS), a Global Positioning System (GPS). Such geolocation devices are well-known in the art. Optionally, the geolocation data comprises at least one of: IMU/TIMU values, motion sensor data values, magnetic field strength values, latitude/longitude coordinates, timing, orientation.

Throughout the present disclosure, the term *"processor"* refers to hardware, software, firmware or a combination of these. The at least one processor controls an overall operation of the system. Optionally, the at one processor is communicably coupled to the at least one hyperspectral camera, the at least one visible-light camera, the LiDAR scanner, and the geolocation device, wirelessly and/or in a wired manner.

Upon capturing the at least one hyperspectral image and the at least one visible-light image, georeferencing is performed on the aforesaid images in order to assign geolocations to pixels of the aforesaid images and then orthorectifying the aforesaid images. It will be appreciated that upon georeferencing the aforesaid images using at least the LiDAR data and the geolocation data enables the at least one processor to accurately and precisely align the aforesaid images with respect to each other in the pixel-wise manner, as information pertaining to which set of pixels in the aforesaid images correspond to which real-world locations would be accurately known to the at least one processor. Moreover, said georeferencing provides a common reference to (pixel-perfectly) align the aforesaid images.

Optionally, when georeferencing the at least one hyperspectral image and the at least one visible-light image, the at least one processor is configured to:
- determine a geolocation of each pixel of the at least one hyperspectral image and each pixel of the at least one visible-light image using the geolocation data; and
- orthorectify the at least one hyperspectral image and the at least one visible-light image using the LiDAR data and at least one of: a camera model, rational polynomial coefficients (RPCs), a ray-tracing technique.

In this regard, since the geolocation data of the aerial vehicle is accurately known to the at least one processor, the at least one processor can easily determine a geolocation of a pixel in the given image as a geolocation of the aerial vehicle at a time of capturing the given image (using the given camera) would correspond to the geolocation of the pixel in the given image. Furthermore, optionally, the at least one processor employs a geographic coordinate system (GCS) for assigning geolocations to the pixels in the given image. Optionally, the GCS defines a real-world geographic location in the real-world environment using latitude and longitude coordinates, and additionally, optionally, using elevation coordinates. The GCS is well-known in the art. It will be appreciated that the aforesaid geolocation may be performed within a given margin of acceptable error (which may lie in a range of +/-10 centimetres to +/-10 metres).

Since an arrangement of the at least one hyperspectral camera and the at least one visible-light camera on the aerial vehicle may be such that an optical axis of the at least one hyperspectral camera and an optical axis of the at least one visible-light camera are (slightly) different, viewpoints and view directions of capturing the at least one hyperspectral image and the at least one visible-light image, respectively, could be (slightly) different. Resultantly, there would always be some offset/skewness between the aforesaid images. Therefore, the at least one processor performs orthorectification on the aforesaid images in a manner that said offset/skewness is minimized. Herein, the term *"orthorectification"* refers to a process of eliminating optical distortions (for example, such as image perspective effects, relief (namely, terrain) effects, and the like) and/or geometric distortions from a given image in order to make the given image planimetrically correct.

It will be appreciated that when the orthorectification is performed using the LiDAR data and the camera model or RPCs, an alignment between a (low resolution) hyperspectral image and a (high resolution) visible-light image is performed with a high accuracy. Greater the accuracy of the DTM/DSM, greater is the accuracy of orthorectification. Optionally, ground control points (GCPs) and/or stationary objects in the real-world environment are also used in the orthorectification, to improve accuracy of the given image upon orthorectification. The technical benefit of using the camera model or RPCs is that it further improves accuracy of the orthorectification, as the camera model or RPCs provide a compact representation of a ground-to-image geometry i.e., a positional correspondence between the given image and a ground surface in the real-world environment. Orthorectification using the LiDAR data and the camera model or rational RPCs is well-known in the art.

It will also be appreciated that when the orthorectification is performed using the LiDAR data and the ray-tracing technique, an alignment between the at least one hyperspectral image and the at least one visible-light image is performed in real time or near-real time, as rays representing a line of sight for each pixel in the aforesaid images can be determined using position and orientation estimates from the LiDAR data and the camera model, thereby facilitating in accurate orthorectification. Orthorectification using the LiDAR data and the ray-tracing technique is well-known in the art. One such way of orthorectification is described, for example, in *"*Real-time georeferencing for an airborne hyperspectral imaging system" by Thomas Opsahl et al., published in Proceedings of the Society of Photo-Optical Instrumentation Engineers (SPIE), Vol. 8048, 2011, which has been incorporated herein by reference.

Optionally, the at least one processor is further configured to associate each pixel of a given image with metadata comprising a boresight of a given camera which captures the given image and a current geolocation data at a time of capturing the given image. In this regard, since the given image is captured using the given camera arranged on the aerial vehicle, and the aerial vehicle is free to move/rotate in the 3D space of the real-world environment during the surveillance (namely, during a flight of the aerial vehicle), an optical component (such as a camera lens, an optical sensor of the given camera, and the like) could (undesirably mechanically) tilt, rotate, and/or shift. Therefore, each pixel of the given image is beneficially associated with the metadata in order to compensate for said undesirable tilts, rotations, and/or shifts.

Optionally, the metadata of each pixel of the given image is also used when orthorectifying the given image. This beneficially improves accuracy of the given image upon orthorectification. This is because utilizing the boresight and the current (i.e., up-to-date) geolocation data facilitates in accurately georeferencing the given image (in real time) taking into account all possible errors due to the aforementioned tilts, rotations, and/or shifts. The term *"boresight"* of the given camera refers to an offset between an optical axis of the given camera and a reference axis of the geolocation device or the aerial vehicle.

Optionally, the system further comprises a data repository communicably coupled to the at least one processor, wherein the at least one processor is configured to:
- store the at least one hyperspectral image and the at least one visible-light image at the data repository upon georeferencing of said images; and
- download the at least one hyperspectral image and the at least one visible-light image from the data repository to a local storage associated with the at least one processor prior to aligning said images with respect to each other in the pixel-wise manner.

Herein, the term *"data repository"* refers to hardware, software, firmware, or a combination of these for storing at least the at least one hyperspectral image and the at least one visible-light image in an organized (namely, structured) manner, thereby, allowing for easy storage, access (namely, retrieval), updating and analysis of said images. The data repository may be implemented as a memory of the system, a memory associated with the at least one processor, a remote memory (such as a cloud-based memory), or similar. The aforesaid images may be stored at the data repository at a resolution of 100x100 metre per pixel.

It will be appreciated that the data repository can be considered to be a centralized database, wherein images (hyperspectral images and/or visible-light images) of different real-world environments can be stored (for a long term), and can be downloaded as and when required. This beneficially avoids separately storing (and downloading) a vast amount of data for the different real-world environments at different storage devices. It will also be appreciated that the given image can be stored at and downloaded from the (single) data repository in real time or near-real time (without any latency/delay). Optionally, the processor is configured to store the at least one labelled hyperspectral image at the data repository.

The aforesaid images may be downloaded to the local storage in a GeoTIFF format along with a georeferenced header information. Such images could be viewed/edited/analysed by way of using a geospatial-based visual software, for example, such as a Quantum Geographic Information System (QGIS) software. Examples of the local storage include, but are not limited to, a Solid State Drive (SSD) storage (such as a flash memory, a memory stick, a Secure Digital (SD) card, and the like), a hard disk drive (HDD) storage, a portable compact disc read-only memory (CD-ROM), a digital versatile disk (DVD).

Upon georeferencing, the at least one hyperspectral image and the at least one visible-light image are aligned in the pixel-wise manner. The technical benefit of such an alignment is that information pertaining to which pixels in the at least one hyperspectral image would correspond to pixels in the at least one visible-light image, is accurately known to the at least one processor. This subsequently facilitates in (pixel-perfect) labelling the pixels of the at least one hyperspectral image. Moreover, a pixel-wise alignment accurately correlates each pixel of each modality with respect to each other.

Optionally, when aligning the at least one hyperspectral image and the at least one visible-light image with respect to each other in the pixel-wise manner, the at least one processor is configured to:
- divide the at least one hyperspectral image and the at least one visible-light image into a plurality of first tiles and a plurality of second tiles, respectively;
- determine extents of the plurality of first tiles from headers thereof;
- determine extents of the plurality of second tiles from headers thereof;
- identify all second tiles from amongst the plurality of second tiles which intersect with the plurality of first tiles;
- convert the plurality of first tiles to a plurality of third tiles, wherein the plurality of third tiles have a lower spectral resolution than the plurality of first tiles; and
- for each second tile amongst the plurality of second tiles, join all third tiles from amongst the plurality of third tiles which intersect said second tile into a mosaic and from the mosaic, crop out a new tile which matches an extent of said second tile.

Optionally, when dividing a given image into a plurality of given tiles, the at least one processor is configured to employ at least one image processing algorithm. Optionally, the at least one image processing algorithm is at least one of: an image slicing algorithm, an image segmentation algorithm, an image culling algorithm, an image cropping algorithm. The term *"tile"* refers to a part (namely, a segment) of the given image. The technical benefit of dividing the given image into the plurality of given tiles is that when the given image is in a form of (manageable) tiles, alignment of such tiles can be easily and accurately performed by the at least one processor, as compared when an entirety of the given image is to be aligned. This is because a size of the entirety of the given image is extremely higher as compared to a size of the given tile, thereby making the alignment process cumbersome and error-prone.

Optionally, a given tile in the given image comprises at least one pixel. In some implementations, the given tile comprises a single pixel, whereas in other implementations, the given tile comprises a plurality of pixels. It will be appreciated that typically the given tile in the given image is of a fixed size, for example, a tile of a size 10 pixels x 10 pixels. However, the given tile could have a dynamic (namely, configurable) size as well. Optionally, the given image is divided into a plurality of equi-sized tiles.

In this regard, a size of the given tile may be system defined, or user defined.

Optionally, a size of a given first tile is equal to a size of a given second tile. However, the plurality of first tiles and the plurality of second tiles may not be aligned with respect to each other. In such a case, a single first tile may intersect multiple second tiles, or a single second tile may intersect multiple first tiles.

Optionally, when determining an extent of a given tile from a header thereof, the at least one processor is configured to utilize World Geodetic System (WGS) 84 coordinates. It will be appreciated that the header of the given tile may have a size of 4 bytes or 8 bytes, and may comprise information pertaining to the given tile (for example, a byte order (such as little endian or big endian), an identifier, a version number, a pointer to an Image File Directory (IFD), a ground resolution per pixel as well as real world coordinates of the top right corner of the tile (to be able to calculate the extent/bounding), and the like).

Optionally, the at least one processor is configured to compare the plurality of second tiles with the plurality of first tiles in a layer-by-layer manner, for identifying all the second tiles from amongst the plurality of second tiles which intersect with the plurality of first tiles. Further, optionally, when converting the plurality of first tiles to the plurality of third tiles, the at least one processor is configured to employ at least one of: a band selection algorithm, a colour matching function. The band selection algorithm may be a minimum estimated abundance covariance (MEAC) algorithm, a linear prediction (LP) algorithm, or similar. It will be appreciated that upon such a conversion, spectral information corresponding to all spectral bands except visible-light spectral band (namely, a Red-Green-Blue (RGB) spectral band) is removed from the at least one hyperspectral image, thereby reducing the spectral resolution of the at least one hyperspectral image. Beneficially, this facilitates in saving considerable storage space in the data repository, as only relevant and useful spectral information is retained in the at least one hyperspectral image. Such information is required for visualisation purposes whilst labelling the pixels of the at least one hyperspectral image. Herein, the term *"spectral resolution"* refers to an amount of spectral information for different wavelength intervals of electromagnetic radiation. Greater the spectral resolution, narrower are the wavelength intervals. It will also be appreciated that all the second tiles which intersect with the plurality of first tiles would also intersect with the plurality of third tiles.

Optionally, when joining the third tiles into the mosaic, the at least one processor is configured to employ at least one other image processing algorithm. In this regard, the at least one other image processing algorithm may be at least one of: an image mosaicing algorithm, an image joining algorithm, an image blending algorithm, an image combining algorithm, an image merging algorithm, an image stitching algorithm. Furthermore, optionally, when cropping out the new tile from the mosaic, the at least one processor is configured to employ the at least one image processing algorithm. Examples of such algorithms are already discussed hereinabove. It will be appreciated that the new tile that is cropped out from the mosaic (formed by the third tiles) has characteristics (such as a spectral resolution) of the third tiles only.

In an example, a second tile may intersect with 4 third tiles T1, T2, T3, and T4 in a manner that the new tile cropped out of a mosaic (formed by joining the 4 third tiles T1-T4) has 25 percent extent of the third tile T1, 25 percent extent of the third tile T2, 60 percent extent of the third tile T3, and 40 percent extent of the third tile T4.

Since the at least one visible-light image has higher image quality (thus, more comprehensive and accurate visual details of the real-world environment) as compared to the at least one hyperspectral image, the at least one visible-light image is used as the ground truth material. In this regard, the pixels of the at least one hyperspectral image are compared with the corresponding pixels of the at least one visible-light image in order to ascertain/verify what exactly the pixels of the at least one hyperspectral image represent in the real-world environment (at a present time). This enables in accurately generating the at least one labelled hyperspectral image. Herein, *"ground truth material"* refers to an ideal expected result.

It will be appreciated that the pixels of the at least one hyperspectral image are labelled by adding informative labels (in form of notes, comments, descriptions, and the like) to said pixels, for generating the at least one hyperspectral image. This could be useful for utilizing the at least one labelled hyperspectral image for determining vegetation data for a plurality of trees within the real-world environment. Such vegetation data may comprise at least one of: species information for the plurality of trees, locations of the plurality of trees, growth rates of the plurality of trees. Optionally, the at least one labelled hyperspectral image is stored at the data repository.

Optionally, when labelling the pixels of the at least one hyperspectral image to generate the at least one labelled hyperspectral image, the at least one processor is configured to:
- draw at least one geo-polygon onto the plurality of third tiles while utilising corresponding portions of the plurality of second tiles;
- transfer the at least one geo-polygon to the plurality of first tiles to identify those pixels of the at least one hyperspectral image which fall within bounds of the at least one geo-polygon; and
- assign a class to the pixels of the at least one hyperspectral image which fall within bounds of the at least one geo-polygon.

In this regard, the term *"geo-polygon"* refers to a polygonal flat shape formed by joining a plurality of pixels of a given third tile, wherein the plurality of pixels correspond to a geographical boundary of a real-world object that is represented by at least one corresponding second tile. The technical benefit of utilizing the second tiles (of the at least one visible-light image) is that they are highly accurate (in terms of representing visual details of the real-world object), and are information-rich. The real-world object may be at least one of: vegetation (such as crops, trees, and the like), a building (such as a hospital, a house, and the like), a ground, a water body (such as a lake, a river, an ocean, and the like). A shape of the geo-polygon could be a square, a rectangle, a circle, an oval, a freeform shape, or similar. It will be appreciated that pixels of first tiles which fall within the bounds of the at least one geo-polygon correspond to those pixels of the at least one hyperspectral image (constituting 448 channel first tiles) which fall within bounds of the at least one geo-polygon.

It will be appreciated that the pixels of the at least one hyperspectral image are associated with a class (namely, a category) which subsequently facilitates the at least one processor to recognise and differentiate said pixels from remaining pixels of the at least one hyperspectral image. Each class may be assigned a unique identifier. Pixels of the at least one hyperspectral image representing a same real-world object are assigned a same class. Therefore, the at least one labelled hyperspectral image may be associated with a plurality of classes. Such a class may, for example, be species of trees, types of rocks, types of soil, and the like.

Optionally, the at least one labelled hyperspectral image is used to train a machine learning model to perform at least one classification task. Herein, the term *"machine learning model"* refers to at least one software module that is trained to determine different patterns in a plurality of labelled hyperspectral images for performing the at least one classification task. It will be appreciated that for training such a machine learning model, semantically meaningful and informative labels (for example, in a form of notes, comments, descriptions, and the like) that are annotated with the at least one labelled hyperspectral image are utilized. The aforesaid image along with the labels is provided as a training dataset to the machine learning model for recognizing certain types of patterns. In this way, the machine learning model would be subsequently able to perform the at least one classification task. Optionally, in this regard, the machine learning model employs at least one machine learning algorithm to get trained from the at least one labelled hyperspectral image. The at least one machine learning algorithm could be one of: a k-nearest neighbours algorithm, a linear regression algorithm, a k-means algorithm, a logistic regression algorithm, a decision tree algorithm, a Naive-Bayes algorithm. Such algorithms are well-known in the art.

It will be appreciated that the at least one classification task could be, for example, a classification of species of trees (as different species of trees reflect different amount of radiation (namely, spectral signatures) in different spectral bands of the electromagnetic spectrum). Advantageously, the system enables in training the machine learning model with an accuracy surpassing 90 percent when differentiating between different species of trees (for example, such as evergreen trees and coniferous trees). By determining species of trees, a vegetation management team may be able to assess severity of trees that are likely to pose a threat to infrastructure, for example, such as powerlines, railway lines, gas pipes and the like.

The present disclosure also relates to the method as described above. Various embodiments and variants disclosed above, with respect to the aforementioned first aspect, apply *mutatis mutandis* to the method.

Optionally, in the method, the step of georeferencing the at least one hyperspectral image and the at least one visible-light image comprises:
- determining a geolocation of each pixel of the at least one hyperspectral image and each pixel of the at least one visible-light image using the geolocation data; and
- orthorectifying the at least one hyperspectral image and the at least one visible-light image using the LiDAR data and at least one of: a camera model, rational polynomial coefficients (RPCs), a ray-tracing technique.

Optionally, in the method, the step of aligning the at least one hyperspectral image and the at least one visible-light image with respect to each other in the pixel-wise manner comprises:
- dividing the at least one hyperspectral image and the at least one visible-light image into a plurality of first tiles and a plurality of second tiles, respectively;
- determining extents of the plurality of first tiles from headers thereof;
- determining extents of the plurality of second tiles from headers thereof;
- identifying all second tiles from amongst the plurality of second tiles which intersect with the plurality of first tiles;
- converting the plurality of first tiles to a plurality of third tiles, wherein the plurality of third tiles have a lower spectral resolution than the plurality of first tiles; and
- for each second tile amongst the plurality of second tiles, joining all third tiles from amongst the plurality of third tiles which intersect said second tile into a mosaic and from the mosaic, cropping out a new tile which matches an extent of said second tile.

Optionally, in the method, the step of labelling the pixels of the at least one hyperspectral image for generating the at least one labelled hyperspectral image comprises:
- drawing at least one geo-polygon onto the plurality of third tiles while utilising corresponding portions of the plurality of second tiles;
- transferring the at least one geo-polygon to the plurality of first tiles to identify those pixels of the at least one hyperspectral image which fall within bounds of the at least one geo-polygon; and
- assigning a class to the pixels of the at least one hyperspectral image which fall within bounds of the at least one geo-polygon.

The present disclosure also relates to the computer program product as described above. Various embodiments and variants disclosed above, with respect to the aforementioned first aspect, apply *mutatis mutandis* to the computer program product.

Throughout the present disclosure, the term *"computer program product"* refers to a software product comprising program instructions that are recorded on the non-transitory machine-readable data storage medium, wherein the software product is executable upon a computing hardware (i.e., the processing device) for implementing the aforementioned steps of the method for remote labelling of hyperspectral data.

The program instructions stored on the non-transitory machine-readable data storage medium can direct the processing device to function in a particular manner, such that the processing device executes processing steps for remote labelling of hyperspectral data. Examples of the non-transitory machine-readable data storage medium includes, but are not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

Throughout the present disclosure, the term *"processing device"* refers to a device that is capable of processing the program instructions of the computer program product. The processing device may, for example, be a microprocessor, a microcontroller, a processing unit, or similar.

### DETAILED DESCRIPTION OF THE DRAWINGS

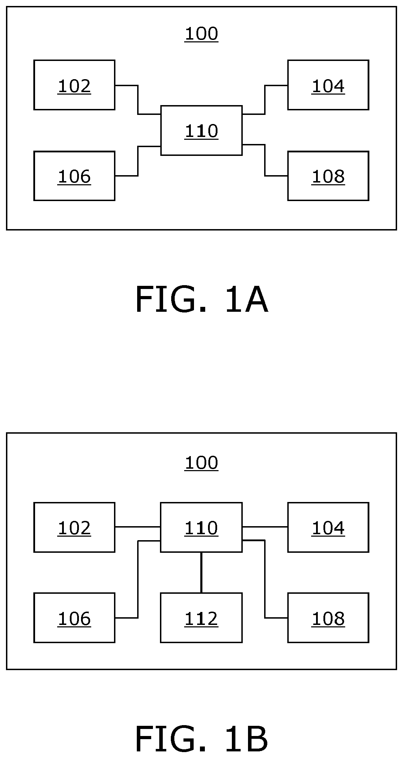

Referring to FIGs. 1A and 1B, illustrated are block diagrams of architectures of a system **100** for remote labelling of hyperspectral data. The system **100** comprises at least one visible-light camera (depicted as a visible-light camera **102),** at least one hyperspectral camera (depicted as a hyperspectral camera **104),** a Light Detection and Ranging (LiDAR) scanner **106,** a geolocation device **108,** and at least one processor (depicted as a processor **110).** The processor **110** is communicably coupled to the visible-light camera **102,** the hyperspectral camera **104,** the LiDAR scanner **106,** and the geolocation device **108.** In FIG. 1B, the system further comprises a data repository **112** that is communicably coupled to the processor **110.**

It may be understood by a person skilled in the art that the FIGs. 1A and 1B include simplified architectures of the system **100** for sake of clarity, which should not unduly limit the scope of the claims herein. It is to be understood that the specific implementation of the system **100** is provided as an example and is not to be construed as limiting it to specific numbers or types of cameras, specific numbers or types of LiDAR scanner, and to specific numbers or types of geolocation device. The person skilled in the art will recognize many variations, alternatives, and modifications of embodiments of the present disclosure.

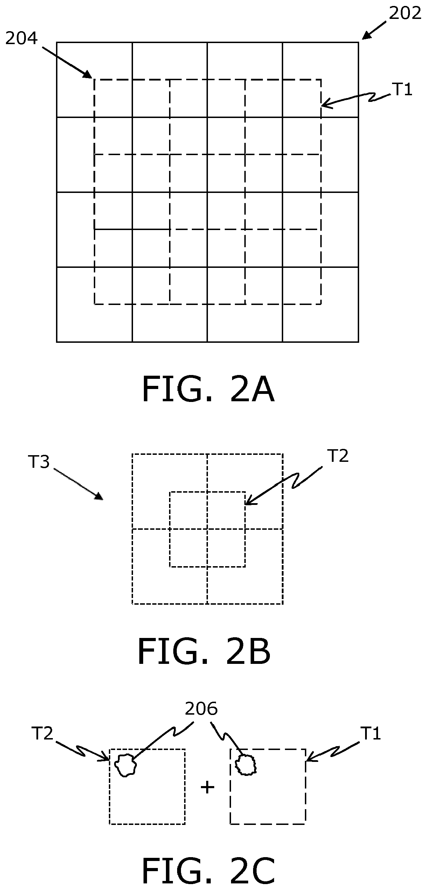

Referring to FIGs. 2A, 2B, and 2C collectively, illustrated is a process flow for aligning a hyperspectral image **202** and a visible-light image **204** with respect to each other, in accordance with an embodiment of the present disclosure. The alignment of the hyperspectral image **202** and the visible-light image **204** is performed in a pixel-wise manner. It will be appreciated that the hyperspectral image **202** and the visible-light image **204** are orthorectified prior to aligning the aforesaid images. In FIG. 2A, there is shown the hyperspectral image **202** and the visible-light image **204** divided into 16 first tiles (depicted as a 4x4 solid line grid) and 9 second tiles (depicted as a 3x3 dashed line grid), respectively. Herein, each second tile (for example, a second tile **T1)** is intersecting with 4 first tiles (depicted as a 2x2 solid line grid). In FIG. 2B, there is shown 4 third tiles **T3** (depicted as a 2x2 square dot grid) that are converted, for example, from corresponding 4 first tiles. The 4 third tiles have a lower spectral resolution than the corresponding 4 first tiles. For sake of simplicity, only 4 third tiles are shown out of 16 third tiles (corresponding to the 16 first tiles). Herein, for the second tile **T1,** the 4 third tiles which intersect the second tile **T1** into a mosaic are joined, and from the mosaic, a new tile **T2** (having a same spectral resolution as that of the 4 third tiles) matching an extent of the second tile **T1** is cropped out. In FIG. 2C, upon aligning, there are shown the new tile **T2** and the second tile **T1** to be used together for labelling pixels of the hyperspectral image **202** to generate a labelled hyperspectral image (not shown). As an example, visual details of an object **206** is considerably higher (i.e., comprehensively depicted) in the second tile **T1,** as compared to the new tile **T2.**

FIGs. 2A-2C are merely examples for sake of clarity, which should not unduly limit the scope of the claims herein. The person skilled in the art will recognize many variations, alternatives, and modifications of embodiments of the present disclosure.

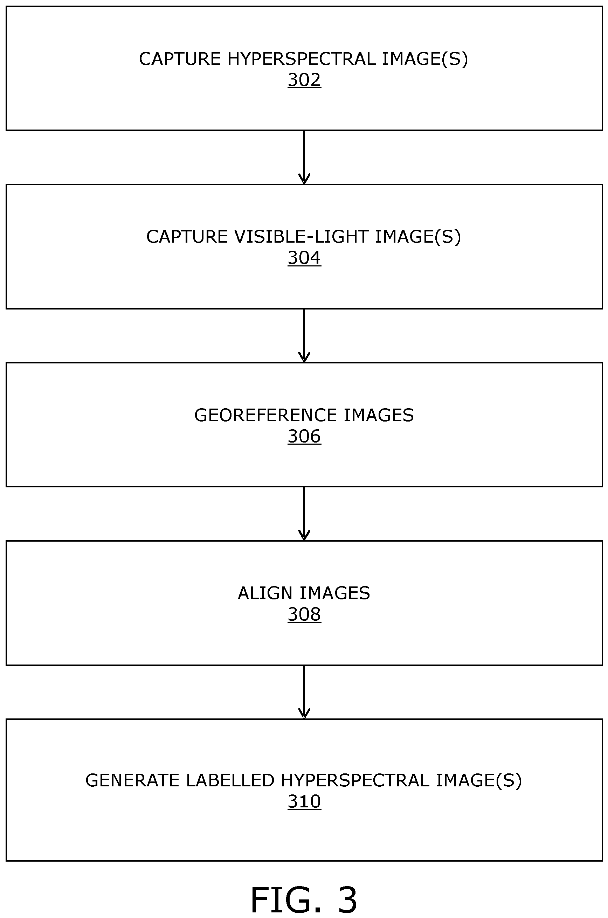

Referring to FIG. 3, illustrated are steps of a method for remote labelling of hyperspectral data, in accordance with an embodiment of the present disclosure. At step **302,** at least one hyperspectral camera is controlled to capture at least one hyperspectral image of a first location in a real-world environment. At step **304,** at least one visible-light camera is controlled to capture at least one visible-light image of the first location. At step **306,** the at least one hyperspectral image and the at least one visible-light image are georeferenced, using at least Light Detection and Ranging (LiDAR) data captured by a LiDAR scanner and geolocation data generated by a geolocation device. At step **308,** the at least one hyperspectral image and the at least one visible-light image are aligned with respect to each other in a pixel-wise manner. At step **310,** pixels of the at least one hyperspectral image are labelled for generating at least one labelled hyperspectral image, by using corresponding pixels of the at least one visible-light image as ground truth material.

The aforementioned steps are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) for remote labelling of hyperspectral data, the system comprising:
at least one visible-light camera (102) arranged on an aerial vehicle that is employed for surveying a real-world environment;
at least one hyperspectral camera (104) arranged on the aerial vehicle;
a Light Detection and Ranging (LiDAR) scanner (106) arranged on the aerial vehicle, wherein the LiDAR scanner, in operation, captures LiDAR data of the real-world environment;
a geolocation device (108) that, in operation, generates geolocation data of the aerial vehicle; and
at least one processor (110) configured to:
- control the at least one hyperspectral camera to capture at least one hyperspectral image (202) of a first location in the real-world environment;
- control the at least one visible-light camera to capture at least one visible-light image (204) of the first location;
- georeference the at least one hyperspectral image and the at least one visible-light image using at least the LiDAR data and the geolocation data;
- align the at least one hyperspectral image and the at least one visible-light image with respect to each other in a pixel-wise manner; and
- label pixels of the at least one hyperspectral image to generate at least one labelled hyperspectral image, by using corresponding pixels of the at least one visible-light image as ground truth material.

2. A system (100) according to claim 1, wherein when georeferencing the at least one hyperspectral image (202) and the at least one visible-light image (204), the at least one processor (110) is configured to:
- determine a geolocation of each pixel of the at least one hyperspectral image and each pixel of the at least one visible-light image using the geolocation data; and
- orthorectify the at least one hyperspectral image and the at least one visible-light image using the LiDAR data and at least one of: a camera model, rational polynomial coefficients (RPCs), a ray-tracing technique.

3. A system (100) according to claim 1 or 2, wherein the at least one processor (110) is further configured to associate each pixel of a given image (202, 204) with metadata comprising a boresight of a given camera (102, 104) which captures the given image and a current geolocation data at a time of capturing the given image.

4. A system (100) according to any of claims 1, 2, or 3, wherein when aligning the at least one hyperspectral image (202) and the at least one visible-light image (204) with respect to each other in the pixel-wise manner, the at least one processor (110) is configured to:
- divide the at least one hyperspectral image and the at least one visible-light image into a plurality of first tiles and a plurality of second tiles (T1), respectively;
- determine extents of the plurality of first tiles from headers thereof;
- determine extents of the plurality of second tiles from headers thereof;
- identify all second tiles from amongst the plurality of second tiles which intersect with the plurality of first tiles;
- convert the plurality of first tiles to a plurality of third tiles (T3), wherein the plurality of third tiles have a lower spectral resolution than the plurality of first tiles; and
- for each second tile amongst the plurality of second tiles, join all third tiles from amongst the plurality of third tiles which intersect said second tile into a mosaic and from the mosaic, crop out a new tile (T2) which matches an extent of said second tile.

5. A system (100) according to claim 4, wherein when labelling the pixels of the at least one hyperspectral image (202) to generate the at least one labelled hyperspectral image, the at least one processor (110) is configured to:
- draw at least one geo-polygon onto the plurality of third tiles while utilising corresponding portions of the plurality of second tiles;
- transfer the at least one geo-polygon to the plurality of first tiles to identify those pixels of the at least one hyperspectral image which fall within bounds of the at least one geo-polygon; and
- assign a class to the pixels of the at least one hyperspectral image which fall within bounds of the at least one geo-polygon.

6. A system (100) according to any of the preceding claims, wherein the at least one hyperspectral image (202) has a first resolution and the at least one visible-light image (204) has a second resolution, the second resolution being greater than the first resolution.

7. A system (100) according to claim 6, wherein the first resolution lies in a range of 0.04 metre x 0.04 metre per pixel to 0.5 metre x 0.5 metre per pixel, and the second resolution lies in a range of 0.01 metre x 0.01 metre per pixel to 0.125 metre x 0.125 metre per pixel.

8. A system (100) according to any of the preceding claims, wherein the at least one hyperspectral image (202) and the at least one visible-light image (204) are captured simultaneously.

9. A system (100) according to any of the preceding claims, further comprising a data repository (112) communicably coupled to the at least one processor (110), wherein the at least one processor is configured to:
- store the at least one hyperspectral image and the at least one visible-light image at the data repository upon georeferencing of said images; and
- download the at least one hyperspectral image and the at least one visible-light image from the data repository to a local storage associated with the at least one processor prior to aligning said images with respect to each other in the pixel-wise manner.

10. A system (100) according to any of the preceding claims, wherein the at least one labelled hyperspectral image (202) is used to train a machine learning model to perform at least one classification task.

11. A method for remote labelling of hyperspectral data, the method comprising:
- controlling at least one hyperspectral camera (104) to capture at least one hyperspectral image (202) of a first location in a real-world environment;
- controlling at least one visible-light camera (102) to capture at least one visible-light image (204) of the first location;
- georeferencing the at least one hyperspectral image and the at least one visible-light image using at least Light Detection and Ranging (LiDAR) data captured by a LiDAR scanner (106) and geolocation data generated by a geolocation device;
- aligning the at least one hyperspectral image and the at least one visible-light image with respect to each other in a pixel-wise manner; and
- labelling pixels of the at least one hyperspectral image for generating at least one labelled hyperspectral image, by using corresponding pixels of the at least one visible-light image as ground truth material.

12. A method according to claim 11, wherein the step of georeferencing the at least one hyperspectral image (202) and the at least one visible-light image (204) comprises:
- determining a geolocation of each pixel of the at least one hyperspectral image and each pixel of the at least one visible-light image using the geolocation data; and
- orthorectifying the at least one hyperspectral image and the at least one visible-light image using the LiDAR data and at least one of: a camera model, rational polynomial coefficients (RPCs), a ray-tracing technique.

13. A method according to claim 11 or 12, wherein the step of aligning the at least one hyperspectral image (202) and the at least one visible-light image (204) with respect to each other in the pixel-wise manner comprises:
- dividing the at least one hyperspectral image and the at least one visible-light image into a plurality of first tiles and a plurality of second tiles (T1), respectively;
- determining extents of the plurality of first tiles from headers thereof;
- determining extents of the plurality of second tiles from headers thereof;
- identifying all second tiles from amongst the plurality of second tiles which intersect with the plurality of first tiles;
- converting the plurality of first tiles to a plurality of third tiles (T3), wherein the plurality of third tiles have a lower spectral resolution than the plurality of first tiles; and
- for each second tile amongst the plurality of second tiles, joining all third tiles from amongst the plurality of third tiles which intersect said second tile into a mosaic and from the mosaic, cropping out a new tile (T2) which matches an extent of said second tile.

14. A method according to claim 13, wherein the step of labelling the pixels of the at least one hyperspectral image (202) for generating the at least one labelled hyperspectral image comprises:
- drawing at least one geo-polygon onto the plurality of third tiles while utilising corresponding portions of the plurality of second tiles (T1);
- transferring the at least one geo-polygon to the plurality of first tiles to identify those pixels of the at least one hyperspectral image which fall within bounds of the at least one geo-polygon; and
- assigning a class to the pixels of the at least one hyperspectral image which fall within bounds of the at least one geo-polygon.

15. A computer program product for remote labelling of hyperspectral data, the computer program product comprising a non-transitory machine-readable data storage medium having stored thereon program instructions that, when accessed by a processing device, cause the processing device to execute steps of a method of any of the claims 11-14.
